# EUROPEAN PATENT APPLICATION

(11) **EP 4 755 703 A1**
(43) Date of publication of application: **10.06.2026**
(21) Application number: 24853154.3
(22) Date of filing: 29.02.2024
(51) Int. Cl.: B60L 53/35, B60L 53/80, B60S 5/06

(54) **POSITION ADJUSTING APPARATUS, BATTERY SWAPPING STATION AND BATTERY SWAPPING METHOD**

(30) Priority: 16.08.2023 CN 202311032747
(71) Applicant: Contemporary Amperex Technology Co., Limited, Ningde, Fujian 352100 (CN); Contemporary Amperex Energy Service Technology Limited, Xiamen, Fujian 361001 (CN)
(72) Inventor: WU, Kai, Ningde, Fujian 352100 (CN); LUO, Feng, Ningde, Fujian 352100 (CN); YE, Qingfeng, Ningde, Fujian 352100 (CN); CHEN, Disong, Ningde, Fujian 352100 (CN); WU, Xiaodong, Ningde, Fujian 352100 (CN)
(74) Representative: Gong, Jinping
(86) International application number: PCT/CN2024/079309
(87) International publication number: WO 2025/035738

(57) **Abstract**

A position adjustment apparatus, a battery swapping station, and a battery swapping method belong to the technical field of battery swapping. The position adjustment apparatus is configured for battery swapping of vehicles, and the position adjustment apparatus includes at least one position adjustment mechanism, the position adjustment mechanism being disposed to be movable in at least one of a first direction or a second direction, where the first direction and the second direction are a vehicle length direction and a vehicle width direction, respectively. The technical solution according to the embodiments of the present application can be compatible with different vehicle models, thereby facilitating development and promotion of battery swapping stations.

## Description

### CROSS-REFERENCE TO RELATED APPLICATIONS

The present application claims priority to Patent Application No. 202311032747.0, filed on August 16, 2023 and entitled "Position Adjustment Apparatus, Battery Swapping Station, and Battery Swapping Method", which is incorporated herein by reference in its entirety.

### TECHNICAL FIELD

Embodiments of the present application relate to the technical field of battery swapping, and more particularly, to a position adjustment apparatus, a battery swapping station, and a battery swapping method.

### BACKGROUND

Energy conservation and emission reduction are key to sustainable development of the automotive industry. In this case, electric vehicles have become an important component of the sustainable development of the automotive industry due to advantages thereof in energy efficiency and environmental protection. For electric vehicles, battery swapping is an important manner of replenishing electrical energy, enabling rapid energy supply for electric vehicles with insufficient energy.

Before replacing a battery of a vehicle, it is necessary to first park the vehicle on a battery swapping platform and use a position adjustment apparatus on the battery swapping platform to adjust and position the vehicle. However, an existing position adjustment apparatus can adjust only a single vehicle model, making it challenging to implement compatibility with a plurality of vehicle models. Therefore, how to provide a position adjustment apparatus to be compatible with different vehicle models is a technical problem that urgently requires resolution.

### SUMMARY

The present application provides a position adjustment apparatus, a battery swapping station, and a battery swapping method, which can be compatible with different vehicle models, thereby facilitating development and promotion of battery swapping stations.

According to a first aspect, a position adjustment apparatus is provided. The position adjustment apparatus is configured for battery swapping of vehicles, and the position adjustment apparatus comprises at least one position adjustment mechanism, the position adjustment mechanism being disposed to be movable in at least one of a first direction or a second direction, where the first direction and the second direction are a vehicle length direction and a vehicle width direction, respectively.

Embodiments of the present application provide a position adjustment apparatus. The position adjustment apparatus comprises at least one position adjustment mechanism. The position adjustment mechanism is configured to move in at least one of the vehicle length direction or the vehicle width direction. In this way, when different types of battery swapping vehicles require battery swapping, the position adjustment apparatus may be compatible with and carry the different types of battery swapping vehicles, thereby adjusting battery swapping postures or positions of the different types of battery swapping vehicles to facilitate subsequent battery swapping operations. Therefore, the technical solution according to the present application can be compatible with different vehicle models, thereby facilitating development and promotion of battery swapping stations.

In a possible implementation, the position adjustment mechanism comprises a first position adjustment mechanism, the first position adjustment mechanism being movable in the first direction. By configuring the first position adjustment mechanism to be movable in the first direction, a position of the first position adjustment mechanism may be adjusted based on vehicle lengths of different battery swapping vehicles, so that the battery swapping vehicles or wheels thereof are located on the first position adjustment mechanism, thereby facilitating the first position adjustment mechanism to adjust battery swapping positions of the battery swapping vehicles.

In a possible implementation, the position adjustment mechanism further comprises a moving assembly, the moving assembly being connected to the first position adjustment mechanism and configured to move the first position adjustment mechanism in the first direction to a target position. By disposing the moving assembly, the first position adjustment mechanism may be moved in the first direction, thereby enabling the first position adjustment mechanism to be compatible with battery swapping vehicles of different vehicle lengths.

In a possible implementation, the moving assembly comprises a driving member and a connecting member, one end of the connecting member being connected to the driving member and the other end being connected to the first position adjustment mechanism, to drive the first position adjustment mechanism to move in the first direction under the driving of the driving member. In this way, the driving member may drive the connecting member to move, to drive the first position adjustment mechanism to move in the first direction.

In a possible implementation, the first position adjustment mechanism comprises a first carrier platform, the first carrier platform being configured to carry a wheel of the battery swapping vehicle. In this way, the first carrier platform is movable in the first direction, so that the first carrier platform may be moved in the first direction to correspondingly carry the wheel of the battery swapping vehicle.

In a possible implementation, the first carrier platform is configured to be liftable. In this way, after the battery swapping vehicle is moved to a battery swapping position by using the first carrier platform, the wheel may be lifted by the first carrier platform to implement lifting of the battery swapping vehicle, thereby facilitating subsequent battery swapping operations.

In a possible implementation, the first carrier platform comprises a wheel positioning groove. In this way, after the battery swapping vehicle is moved to the battery swapping position by using the first carrier platform, the battery swapping vehicle is fixed on the first carrier platform by using the wheel positioning groove, to prevent movement of the battery swapping vehicle in a process of lifting the battery swapping vehicle, thereby facilitating improvement of reliability of a battery swapping process.

In a possible implementation, a movable range of the first position adjustment mechanism in the first direction is 180 mm to 400 mm, thereby facilitating adaptation to battery swapping vehicles of different vehicle lengths. Optionally, the movable range of the first position adjustment mechanism in the first direction is 190 mm to 210 mm, thereby reducing a cost increase caused by a larger movable range of the first position adjustment mechanism in the first direction while adapting to battery swapping vehicles of different vehicle lengths, which facilitates control of costs.

In a possible implementation, the position adjustment mechanism further comprises a second position adjustment mechanism, the first position adjustment mechanism and the second position adjustment mechanism are sequentially disposed in the first direction, and the first position adjustment mechanism and the second position adjustment mechanism are respectively configured to correspond to at least two wheels of the battery swapping vehicle that are disposed at different positions in the first direction. In this way, the position adjustment apparatus may be applicable to a vehicle comprising two or more pairs of wheels. By disposing the first position adjustment mechanism and the second position adjustment mechanism, the position adjustment apparatus may be compatible to more types of battery swapping vehicles.

In a possible implementation, the first position adjustment mechanism is disposed to correspond to a front wheel position of the battery swapping vehicle, and the second position adjustment mechanism is disposed to correspond to a rear wheel position of the battery swapping vehicle.

In the solution described above, when a battery position in the battery swapping vehicle is positioned by using a front wheel as a reference, adjusting a position of the first position adjustment mechanism in the first direction facilitates parking the front wheel of the vehicle at a predetermined position, thereby facilitating battery swapping of the battery swapping vehicle at the predetermined position. In addition, when a first-direction size of the first position adjustment mechanism is smaller than that of the second position adjustment mechanism, the first position adjustment mechanism is disposed to be movable in the first direction, thereby facilitating reduction of production costs.

In a possible implementation, a position of the second position adjustment mechanism in the first direction is fixed, and the second position adjustment mechanism comprises a second carrier platform, a size of the second carrier platform in the first direction being greater than a size of the first carrier platform of the first position adjustment mechanism in the first direction.

In the solution described above, the first position adjustment mechanism comprises the first carrier platform, the second position adjustment mechanism comprises the second carrier platform, the battery swapping vehicle may be parked on the first carrier platform and the second carrier platform after the first position adjustment mechanism moves to the target position, the battery swapping vehicle is carried by the first carrier platform and the second carrier platform, and a position of the battery swapping vehicle in the second direction is adjusted on the first carrier platform and the second carrier platform. The first position adjustment mechanism is movable in the first direction, the position of the second position adjustment mechanism in the first direction is fixed, and the size of the second carrier platform in the first direction is greater than the size of the first carrier platform in the first direction. In this way, this may be compatible with a plurality of types of battery swapping vehicles, while the structural complexity of the position adjustment apparatus may be reduced, thereby facilitating reduction of production costs.

In a possible implementation, the second carrier platform is configured to carry at least two wheels of the battery swapping vehicle in the first direction. When the battery swapping vehicle has three or more pairs of wheels, the second carrier platform may carry at least two wheels of the battery swapping vehicle in the first direction. In this way, by disposing the second carrier platform, the position adjustment apparatus may be compatible with more types of battery swapping vehicles, such as a non-passenger vehicle comprising three or more pairs of wheels.

In a possible implementation, the size of the second carrier platform in the first direction is 1000 mm to 1500 mm; and optionally, the size of the second carrier platform in the first direction is 1100 mm to 1300 mm. In this way, the position adjustment apparatus is facilitated to be compatible with more battery swapping vehicles of different vehicle lengths.

In a possible implementation, the second position adjustment mechanism is movable in the first direction. Both the first position adjustment mechanism and the second position adjustment mechanism are movable in the first direction. In this way, an adjustment range of the position of the position adjustment apparatus in the first direction can be further increased, and may be applicable to more types of battery swapping vehicles. In addition, the flexibility of the position adjustment apparatus is enhanced, facilitating flexible adjustment of the positions of the first position adjustment mechanism and the second position adjustment mechanism in the first direction based on actual conditions.

In a possible implementation, the movable range of the first position adjustment mechanism is larger than a movable range of the second position adjustment mechanism. In this way, the first position adjustment mechanism has a larger movable range in the first direction, and the second position adjustment mechanism has a smaller movable range in the second direction, thereby ensuring compatibility with more types of battery swapping vehicles while reducing production costs.

In a possible implementation, the position adjustment apparatus further comprises a position calibration mechanism, the position calibration mechanism being disposed to move the battery swapping vehicle in the second direction to a preset position. After the battery swapping vehicle enters a battery swapping platform, the battery swapping vehicle may deviate from the preset position. The position calibration mechanism may move the battery swapping vehicle to the preset position, thereby facilitating subsequent battery swapping operations.

In a possible implementation, the position calibration mechanism comprises a push rod mechanism, the push rod mechanism being disposed to push the battery swapping vehicle in the second direction to the preset position. After the battery swapping vehicle enters the battery swapping platform, the battery swapping vehicle may exhibit a condition such as a vehicle body skew, or a vehicle body skew toward a side in the second direction of the battery swapping platform. By using the push rod mechanism, the vehicle body of the battery swapping vehicle can be aligned, or the battery swapping vehicle may be moved in the second direction to the preset position, thereby facilitating subsequent battery swapping operations.

In a possible implementation, the first position adjustment mechanism comprises the first carrier platform, the position adjustment apparatus further comprises the second carrier platform, the first carrier platform and the second carrier platform are respectively configured to carry wheels of the battery swapping vehicle that are disposed at different positions in the first direction, and at least one of the first carrier platform and the second carrier platform is provided with a plurality of rollers arranged in the second direction.

In the solution described above, the plurality of rollers are arranged in the second direction. In this way, the plurality of rollers may transport the battery swapping vehicle in the second direction to the preset position under the action of the push rod mechanism.

In a possible implementation, the push rod mechanism is disposed on at least one of the first carrier platform and the second carrier platform for pushing the battery swapping vehicle on the first carrier platform and/or the second carrier platform to the preset position. In this way, on the one hand, it is easy to push the battery swapping vehicle; on the other hand, there is no need for additional installation space for the push rod mechanism on the battery swapping platform, thereby facilitating improvement of space utilization of the battery swapping platform.

In a possible implementation, at least one of the first carrier platform and the second carrier platform is provided with two rows of rollers that are opposite to each other in the first direction, the two rows of rollers being inclined relative to each other to form a positioning groove for fixing a wheel. In this way, after the battery swapping vehicle is moved to the preset position, the battery swapping vehicle is positioned and fixed by using the positioning groove formed by the rollers.

In a possible implementation, a size of the first carrier platform in the second direction and/or a size of the second carrier platform in the second direction is 2000 mm to 2300 mm; and optionally, the size of the first carrier platform in the second direction and/or the size of the second carrier platform in the second direction is 2000 mm to 2200 mm. In this way, it is easy to adapt to battery swapping vehicles of different vehicle widths and different wheel sizes.

In a possible implementation, the position adjustment apparatus comprises at least three position adjustment mechanisms, the at least three position adjustment mechanisms being sequentially disposed in the first direction, and at least two of the at least three position adjustment mechanisms being configured to respectively correspond to wheels of a battery swapping vehicle that are disposed at different positions in the first direction. In this way, it is easy to adjust the battery swapping position of the battery swapping vehicle by selecting a corresponding position adjustment mechanism based on the vehicle length of the battery swapping vehicle.

In a possible implementation, the position adjustment apparatus further comprises an adjustment mechanism, the adjustment mechanism being configured to move the battery swapping vehicle in the second direction to a preset position, where the second direction is perpendicular to the first direction. After the battery swapping vehicle enters a battery swapping platform, the battery swapping vehicle may deviate from the preset position. The adjustment mechanism may move the battery swapping vehicle to the preset position, thereby facilitating subsequent battery swapping operations.

According to a second aspect, the present application provides a battery swapping station, comprising the position adjustment apparatus according to the first aspect and any one of the possible implementations in the first aspect.

According to a third aspect, the present application provides a battery swapping method, comprising: obtaining information about a battery swapping vehicle; and adjusting a position adjustment apparatus based on the information about the battery swapping vehicle before the battery swapping vehicle enters a battery swapping platform.

The solution described above may be applicable to different types of battery swapping vehicles, so that the position adjustment apparatus may be adjusted based on the information about the battery swapping vehicle.

In a possible implementation, the adjusting a position adjustment apparatus based on the information about the battery swapping vehicle before the battery swapping vehicle enters a battery swapping platform comprises: moving positions of several position adjustment mechanisms to correspond to the information about the battery swapping vehicle; or determining several position adjustment mechanisms corresponding to the information about the battery swapping vehicle. In this way, it is easy to adjust battery swapping positions of different types of battery swapping vehicles based on a specific setting of the position adjustment apparatus and information about the battery swapping vehicles.

In a possible implementation, the battery swapping method further comprises: controlling the position adjustment apparatus to adjust a position of the battery swapping vehicle after the battery swapping vehicle is parked on the position adjustment apparatus. In this way, after the battery swapping vehicle enters the battery swapping platform, the position adjustment apparatus is controlled to adjust the position of the battery swapping vehicle, to facilitate subsequent battery swapping operations.

The present application provides a position adjustment apparatus. The position adjustment apparatus comprises at least one position adjustment mechanism. The position adjustment mechanism is configured to move in at least one of the vehicle length direction or the vehicle width direction. In this way, when different types of battery swapping vehicles require battery swapping, the position adjustment apparatus may be compatible with and carry the different types of battery swapping vehicles, thereby adjusting battery swapping postures or positions of the different types of battery swapping vehicles to facilitate subsequent battery swapping operations. Therefore, the technical solution according to the present application can be compatible with different vehicle models, thereby facilitating development and promotion of battery swapping stations.

### DESCRIPTION OF DRAWINGS

To describe the technical solutions in embodiments of the present application more clearly, the following briefly describes the accompanying drawings needed for the embodiments of the present application. Clearly, the accompanying drawings described below are merely some embodiments of the present application. Those of ordinary skill in the art can still derive other accompanying drawings from these accompanying drawings without creative efforts.
FIG. 1 is a schematic diagram of a structure of a battery swapping station according to an embodiment of the present application;
FIG. 2 is a schematic diagram of a structure of a battery swapping platform according to an embodiment of the present application;
FIG. 3 is a schematic diagram of a structure of a battery swapping platform according to an embodiment of the present application;
FIG. 4 is a schematic diagram of a structure of a position adjustment apparatus according to an embodiment of the present application;
FIG. 5 is an enlarged schematic diagram of a region A in FIG. 4;
FIG. 6 is a schematic diagram of a structure of a position adjustment apparatus from another viewing angle according to an embodiment of the present application;
FIG. 7 is a schematic diagram of a structure of a position adjustment apparatus according to an embodiment of the present application;
FIG. 8 is a schematic diagram of a second position adjustment mechanism according to an embodiment of the present application;
FIG. 9 is a schematic diagram of a structure of a first position adjustment mechanism according to an embodiment of the present application;
FIG. 10 is a schematic diagram of a structure of a cross-section in a direction B-B in FIG. 9;
FIG. 11 is a schematic diagram of a structure of a battery swapping platform according to an embodiment of the present application; and
FIG. 12 is a schematic diagram of a battery swapping method according to an embodiment of the present application.

In the drawings, the figures are not drawn to actual scale.

### Reference signs:

1: battery swapping vehicle; 100: battery swapping station; 101: battery rack; 102: palletizer; 200: battery swapping platform; 300: vehicle lifting apparatus; 104: front ramp; 103: rear ramp; 400: position adjustment apparatus; 400a: position adjustment mechanism; 410: first position adjustment mechanism; 411: first carrier platform; 413: lifting member; 4131: base; 4132: telescopic rod; 4133: driving motor; 4111: wheel positioning groove; 420: second position adjustment mechanism; 421: second carrier platform; 460: position calibration mechanism; 461: push rod mechanism; 4611: push rod; 462: roller; 440: fourth position adjustment mechanism; 450: fifth position adjustment mechanism; 460: sixth position adjustment mechanism; 490: adjustment mechanism; 500: moving assembly; 510: driving member; 520: connecting member.

### DESCRIPTION OF EMBODIMENTS

The following further describes implementations of the present application in detail with reference to the drawings and the embodiments. The following detailed descriptions of the embodiments and the drawings are provided to illustrate the principles of the present application, but are not intended to limit the scope of the application, that is, the present application is not limited to the described embodiments.

In the descriptions of the present application, it should be noted that, unless otherwise noted, "a plurality of" means two or more; and an orientation relationship or a position relationship indicated by terms "upper", "lower", "left", "right", "inside", and "outside" is merely for ease of describing present application and simplifying the description, rather than indicating or implying that a specified apparatus or element necessarily has a specific orientation or is constructed and operated in a specific orientation. Therefore, the terms should not be construed as a limitation on this application. In addition, terms "first", "second", "third", etc. are used to distinguish between different objects and are not used to describe a specific order or a primary-secondary relationship. "Perpendicular" does not refer to strict perpendicularity, but rather to being within an acceptable range of error. "Parallel" does not refer to strict parallelism, but rather to being within an acceptable range of error.

The directional terms appearing in the following descriptions refer to directions shown in the drawings and are not intended to limit the specific structure of the present application. In the descriptions of the present application, it should be further noted that, unless otherwise explicitly specified and defined, the terms "mounted", "connected", and "connect" are to be understood in a broad sense, for example, may be fixedly connected, detachably connected, or integrally connected, may be directly connected, or may be indirectly connected via an intermediate medium. Those of ordinary skill in the art may understand specific meanings of these terms in the present application according to specific situations.

Unless otherwise defined, all technical and scientific terms used in the present application have the same meaning as commonly understood by those skilled in the art of the present application. In the present application, the terms used in the specification of the present application are used only for the purpose of describing specific embodiments and are not intended to limit the present application, and the terms "comprise", "have", and any variations thereof in the specification and claims of the present application and the foregoing description of the drawings are intended to cover a non-exclusive inclusion.

An "embodiment" in the present application means that a specific feature, structure, or characteristic described with reference to the embodiment may be included in at least one embodiment of the present application. The phrase in various places in the description does not necessarily all refer to the same embodiment, or a separate or alternative embodiment mutually exclusive of other embodiments. Those skilled in the art explicitly and implicitly understand that the described embodiments in the present application may be combined with another embodiment.

With an increase in the quantity of electric vehicles, requirements for the electric vehicles are also becoming increasingly high. In a driving process of an electric vehicle, the battery level gradually decreases. In a current technique, batteries in the vehicle need to be regularly charged by using charging piles, to ensure that the batteries have sufficient power to maintain continuous vehicle operation. However, because a battery capacity is generally large, each charging time may be long, and in the long charging time, a user cannot use the vehicle. Therefore, vehicle use experience of the user is seriously affected. Therefore, battery swapping stations have emerged, which can directly replace batteries with insufficient power in a vehicle with batteries with sufficient power. An entire battery swapping process is quick, significantly saving the time required for battery charging. This does not affect use of the vehicle by a user, thereby greatly improving use experience of the vehicle by the user.

Before replacing a battery of a vehicle, it is necessary to first park the vehicle on a battery swapping platform and use a position adjustment apparatus on the battery swapping platform to adjust and position the vehicle. However, some position adjustment apparatuses can adjust only a single vehicle model, making it challenging to implement compatibility with a plurality of vehicle models, which is disadvantageous for development and promotion of a battery swapping station.

In view of this, the present application provides a position adjustment apparatus for battery swapping of vehicles. The position adjustment apparatus includes at least one position adjustment mechanism, the position adjustment mechanism being movable in at least one of a first direction and a second direction, where the first direction and the second direction are a vehicle length direction and a vehicle width direction, respectively. The moved position adjustment mechanism may correspond to a position of a battery swapping vehicle after the battery swapping vehicle enters a battery swapping station, to perform subsequent position adjustment on the battery swapping vehicle. In this way, the compatibility of the position adjustment apparatus with different types of battery swapping vehicles can be implemented, thereby facilitating development and promotion of battery swapping stations.

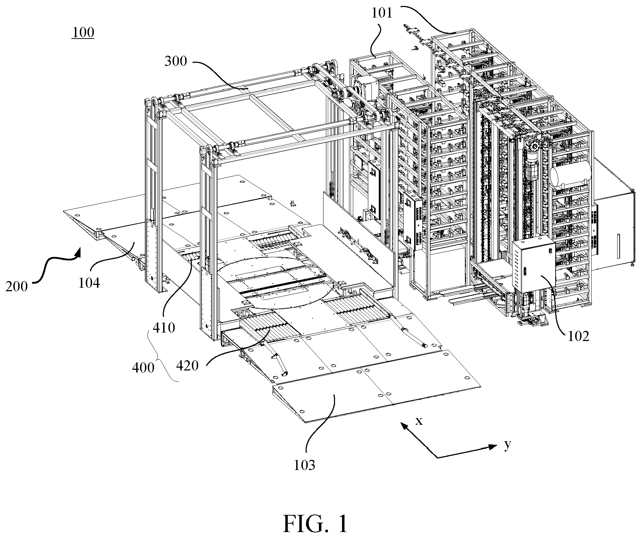

FIG. 1 is a schematic diagram of a structure of a battery swapping station 100 according to an embodiment of the present application.

The battery swapping station 100 may include a battery rack 101. The battery rack 101 may be configured with a plurality of batteries. The battery rack 101 may include a battery charging compartment and a battery buffering apparatus. The batteries may be stored in the battery charging compartment, so that the batteries can be charged. The battery buffering apparatus may be configured to temporarily store depleted batteries replaced from a vehicle.

In addition to the battery rack 101, the battery swapping station 100 may further include a palletizer 102 and a movable battery swapping apparatus (not shown in FIG. 1). The movable battery swapping apparatus may transport the depleted batteries replaced from the vehicle to the battery buffering apparatus, and the palletizer 102 transports the depleted batteries in the battery buffering apparatus to the battery rack 101, so that the battery rack 101 charges the depleted batteries. In addition, the palletizer 102 may transport fully-charged batteries on the battery rack 101 to the movable battery swapping apparatus, and the movable battery swapping apparatus carries the fully-charged batteries to a vehicle, and mounts the fully-charged batteries in the vehicle. In an example, the movable battery swapping apparatus may be, for example, a rail guided vehicle (rail guided vehicle, RGV) or an automated guided vehicle (automated guided vehicle, AGV).

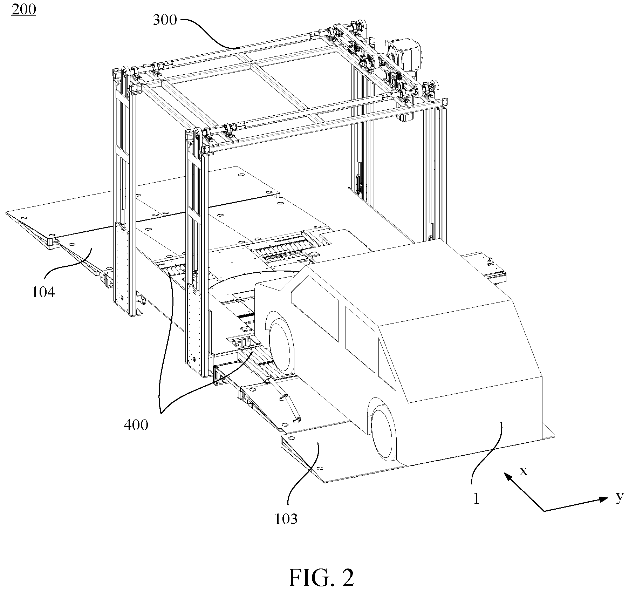

The battery swapping station 100 may further include a battery swapping platform 200. FIG. 2 shows a schematic diagram of a battery swapping vehicle 1 driving on the battery swapping platform 200. On the battery swapping platform 200, the movable battery swapping apparatus may replace batteries on the battery swapping vehicle 1. The x direction in FIG. 1 and FIG. 2 may be a driving direction of the battery swapping vehicle 1 on the battery swapping platform 200 or a vehicle length direction of the battery swapping vehicle 1, and the y direction may be a driving direction of the movable battery swapping apparatus on the battery swapping platform 200 or a vehicle width direction of the battery swapping vehicle 1. The movable battery swapping apparatus may be moved in the y direction to the vicinity of the battery swapping vehicle 1 through a guide rail on the battery swapping platform 200.

The battery swapping station 100 may further include a position adjustment apparatus 400, the position adjustment apparatus 400 being configured to adjust the battery swapping vehicle 1 to a battery swapping position and fix the battery swapping vehicle after the battery swapping vehicle 1 enters the battery swapping platform 200.

The battery swapping station 100 may further include a vehicle lifting apparatus 300, the vehicle lifting apparatus 300 being configured to lift the battery swapping vehicle 1 after the battery swapping vehicle 1 is fixed in the battery swapping position. In some application scenarios, batteries are mounted in a chassis of the battery swapping vehicle 1. In a battery swapping process, the vehicle needs to be lifted first, and then the movable battery swapping apparatus is moved to be under the battery swapping vehicle 1, and replaces the batteries in the chassis.

In an example, in the embodiment shown in FIG. 1 and FIG. 2, the battery swapping platform 200 may include the vehicle lifting apparatus 300, a front ramp 104, a rear ramp 103, and the position adjustment apparatus 400. The battery swapping vehicle 1 can drive from the rear ramp 103 towards the front ramp 104, as shown in FIG. 2. The position adjustment apparatus 400 may be located between the front ramp 104 and the rear ramp 103 in the driving direction of the battery swapping vehicle 1. The position adjustment apparatus 400 may be configured to adjust and position the battery swapping vehicle 1, to position the battery swapping vehicle 1 in the x direction and the y direction, so that the battery swapping vehicle 1 may be fixed relative to the battery swapping platform 200. When the battery swapping platform 200 completes the positioning of the battery swapping vehicle 1, the vehicle lifting apparatus 300 may be triggered to lift the battery swapping vehicle 1.

After the battery swapping vehicle 1 is lifted, the movable battery swapping apparatus may be moved to be under the battery swapping vehicle 1. When the movable battery swapping apparatus is aligned with the batteries in the chassis of the battery swapping vehicle 1, the movable battery swapping apparatus may remove depleted batteries in the vehicle, and then the movable battery swapping apparatus is moved to the vicinity of the battery buffering apparatus, to place the depleted batteries in the battery buffering apparatus. The palletizer 102 obtains fully-charged batteries from the battery rack 101 in advance and waits at the battery buffering apparatus for the movable battery swapping apparatus. After the movable battery swapping apparatus stores the depleted batteries in the battery buffering apparatus, the palletizer 102 places the fully-charged batteries into the movable battery swapping apparatus without batteries and transports the depleted batteries in the battery buffering apparatus to the battery rack 101 for charging. Further, the movable battery swapping apparatus obtains the fully-charged batteries to be mounted from the palletizer 102, carries the fully-charged batteries to be mounted and drives to be under the battery swapping vehicle 1, and mounts the batteries to be mounted into the chassis of the battery swapping vehicle 1.

Optionally, a locking mechanism is disposed in the chassis of the battery swapping vehicle 1, locking portions corresponding to the locking mechanism are disposed in the batteries, the locking mechanism may be configured to lock the locking portions, so that the batteries can be locked and mounted on the chassis of the battery swapping vehicle 1. Correspondingly, the locking structure may also be configured to unlock the locking portions, so that the batteries can be unlocked and removed from the chassis of the battery swapping vehicle 1. In a process of removing and mounting batteries by the movable battery swapping apparatus, the movable battery swapping apparatus may press the batteries upward, to implement unlocking and locking between the locking portions in the batteries and the locking mechanism in the battery swapping vehicle 1, thereby completing removal and mounting of the batteries.

After the battery swapping vehicle 1 completes battery swapping, the movable battery swapping apparatus exits the battery swapping platform 200, and the vehicle lifting apparatus 300 may lower the battery swapping vehicle 1 back to the battery swapping platform 200.

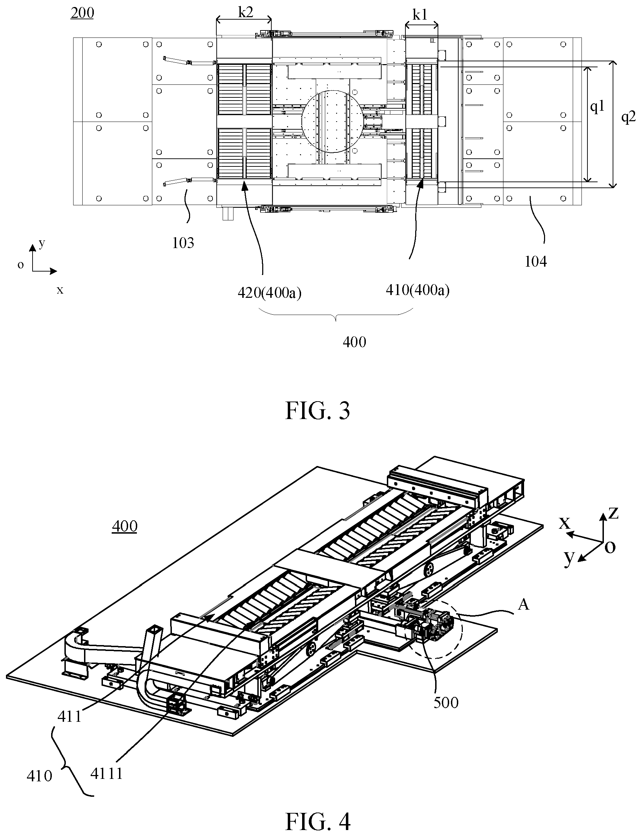

FIG. 3 is a schematic diagram of a battery swapping platform according to an embodiment of the present application. As shown in FIG. 3, the battery swapping platform 200 includes a position adjustment apparatus 400.

As shown in FIG. 3, this embodiment of the present application provides a position adjustment apparatus 400. The position adjustment apparatus 400 is configured for battery swapping of vehicles, and the position adjustment apparatus 400 includes at least one position adjustment mechanism 400a, the position adjustment mechanism 400a being disposed to be movable in at least one of a first direction or a second direction, where the first direction and the second direction are a vehicle length direction and a vehicle width direction, respectively. The position adjustment apparatus 400 can adjust positions to correspondingly carry different types of battery swapping vehicles 1, the different types of battery swapping vehicles 1 being different in at least one of a vehicle length size and a vehicle width size, and configured for subsequent adjustment of vehicle positions.

The position of the position adjustment mechanism 400a can be adjusted. For example, the position of the position adjustment mechanism 400a can be adjusted in the first direction and cannot be adjusted in the second direction. For another example, the position of the position adjustment mechanism 400a can be adjusted in both the first direction and the second direction. For another example, the position of the position adjustment mechanism 400a can be adjusted in the second direction and cannot be adjusted in the first direction.

The first direction is different from the second direction. For example, the first direction may be perpendicular to the second direction.

The position adjustment mechanism 400a is disposed to be able to carry a battery swapping vehicle 1, that is, the battery swapping vehicle 1 can be parked on the position adjustment mechanism 400a after entering the battery swapping platform, and the position adjustment mechanism 400a may adjust, position, and fix the position of the battery swapping vehicle 1.

The different types of battery swapping vehicles 1 are different in at least one of the vehicle length and the vehicle width. For example, the different types of battery swapping vehicles 1 may include a passenger vehicle and a logistics vehicle. The passenger vehicle and the logistics vehicle have different vehicle lengths and vehicle widths. For another example, the logistics vehicle includes a plurality of different types of logistics vehicles, and because of different uses or designs, the different logistics vehicles have different vehicle lengths, vehicle widths, quantities of wheels, and the like.

The position of the position adjustment mechanism 400a is adjustable, so that the position adjustment mechanism 400a can carry different types of battery swapping vehicles 1.

Optionally, the position adjustment apparatus 400 further includes a power mechanism. The power mechanism may be configured to provide a source of power for operation of some components in the position adjustment mechanism.

An embodiment of the present application provides a position adjustment apparatus 400, including a position adjustment mechanism 400a that can be adjusted to correspondingly carry different types of battery swapping vehicles 1, the different types of battery swapping vehicles 1 being different in at least one of the vehicle length and the vehicle width. In this way, when different types of battery swapping vehicles 1 require battery swapping, the position adjustment apparatus 400 may be compatible with and carry the different types of battery swapping vehicles 1, thereby adjusting battery swapping positions of the different types of battery swapping vehicles 1 to facilitate subsequent battery swapping operations. Therefore, the technical solution according to the embodiments of the present application can be compatible with different vehicle models, thereby facilitating development and promotion of battery swapping stations.

In some embodiments, the position adjustment mechanism 400a includes a first position adjustment mechanism 410, the first position adjustment mechanism 410 being movable in the first direction.

The first direction is the vehicle length direction of the battery swapping vehicle 1, and may alternatively be a driving direction of the battery swapping vehicle 1. For example, as shown in FIG. 1 to FIG. 3, the first direction may be the x direction in the drawings.

Because different types of battery swapping vehicles 1 have different vehicle lengths or vehicle widths, after battery swapping vehicles 1 enter the battery swapping platform 200, the positions where the battery swapping vehicles are parked on the battery swapping platform 200 are different, and the positions of corresponding position adjustment mechanisms 400a are also different. For example, as shown in FIG. 1 to FIG. 3, after entering the battery swapping platform 200, a front wheel of a battery swapping vehicle 1 having a longer vehicle length is closer to the front ramp 104 than a front wheel of a battery swapping vehicle 1 having a shorter vehicle length, and/or a rear wheel of the battery swapping vehicle 1 having a longer vehicle length is closer to the rear ramp 104 than a rear wheel of the battery swapping vehicle 1 having a shorter vehicle length.

By configuring the first position adjustment mechanism 410 to be movable in the first direction, a position of the first position adjustment mechanism 410 in the first direction may be adjusted based on vehicle lengths of different battery swapping vehicles 1, so that the battery swapping vehicles 1 or wheels thereof may be located on the first position adjustment mechanism 410, thereby facilitating the first position adjustment mechanism 410 to adjust battery swapping positions of the battery swapping vehicles 1.

FIG. 4 is a schematic diagram of a position adjustment apparatus according to an embodiment of the present application. In some embodiments, as shown in FIG. 4, the position adjustment mechanism 400a includes a moving assembly 500, the moving assembly 500 being connected to the first position adjustment mechanism 410 and configured to move the first position adjustment mechanism 410 in the first direction to a target position.

Optionally, as shown in FIG. 4, the moving assembly 500 is located at an end portion of the first position adjustment mechanism 410 in the first direction. In this way, mounting of the moving assembly 500 is facilitated, and the connection of the moving assembly 500 to the first position adjustment mechanism 410 is facilitated, so that the first position adjustment mechanism 410 moves in the first direction.

The target position of the first position adjustment mechanism 410 may be a position of the first position adjustment mechanism 410 obtained by a control system of the battery swapping station 100 based on vehicle information of a battery swapping vehicle 1. When the first position adjustment mechanism 410 is located at the target position, the battery swapping vehicle 1 or a wheel of the battery swapping vehicle 1 is located on the first position adjustment mechanism 410.

For example, when the first position adjustment mechanism 410 is configured to carry the wheel of the battery swapping vehicle 1, the target position of the first position adjustment mechanism 410 corresponds to a wheel position after the battery swapping vehicle 1 enters the battery swapping platform 200; and when the first position adjustment mechanism 410 is configured to carry a chassis of the battery swapping vehicle 1, the target position of the first position adjustment mechanism 410 corresponds to a chassis position after the battery swapping vehicle 1 enters the battery swapping platform 200.

By disposing the moving assembly 500, the first position adjustment mechanism 410 may be moved in the first direction, thereby enabling the first position adjustment mechanism 410 to be compatible with battery swapping vehicles 1 of different vehicle lengths.

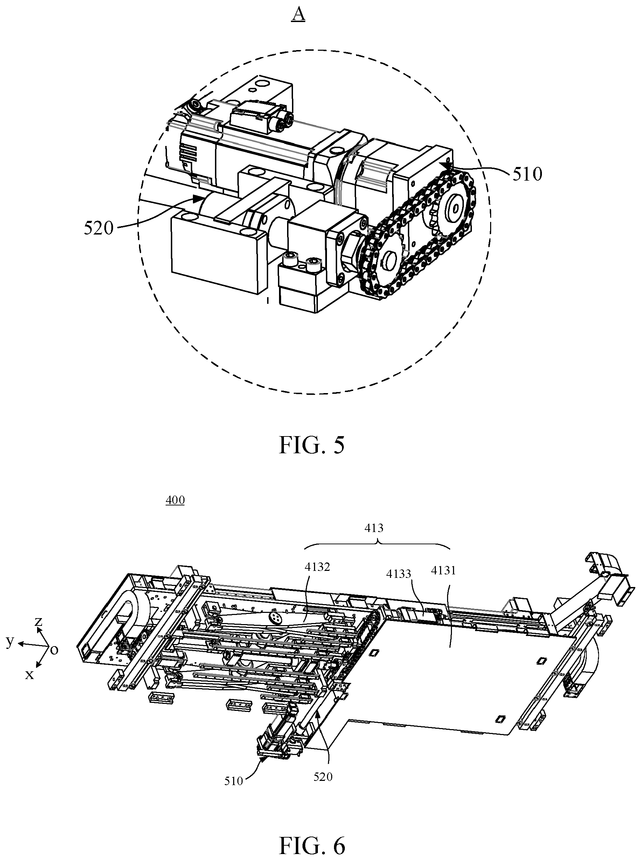

FIG. 5 is an enlarged schematic diagram of a region A in FIG. 4. FIG. 6 is a schematic diagram of a position adjustment apparatus 400 from another viewing angle according to an embodiment of the present application. In some embodiments, as shown in FIG. 5 and FIG. 6, the moving assembly 500 includes a driving member 510 and a connecting member 520, one end of the connecting member 520 being connected to the driving member 510 and the other end of the connecting member 510 being connected to the first position adjustment mechanism 410, to drive the first position adjustment mechanism 410 to move in the first direction under the driving of the driving member 510.

Optionally, the connecting member 520 extends in the first direction, and in the first direction, one end of the connecting member 520 is connected to the first position adjustment mechanism 410 and the other end is connected to an output end of the driving member 510.

Optionally, the connecting member 520 includes a lead screw and a helical transmission member, one end of the lead screw is connected to the driving member 510 through the helical transmission member, and the other end is connected to the first position adjustment mechanism 410. When the driving member 510 rotates, the helical transmission member may be rotated, the helical transmission member may drive the lead screw to move in the first direction, and the lead screw may drive the first position adjustment mechanism 410 to move in the first direction.

The driving member 510 may be a motor that provides a source of power for movement of the first position adjustment mechanism 410.

Optionally, when the first position adjustment mechanism 410 moves to the target position, the driving member 510 stops rotating, then the connecting member 520 stops moving, and the first position adjustment mechanism 410 may be fixed at the target position.

In this embodiment, the movement of the first position adjustment mechanism 410 in the first direction is implemented by disposing the driving member 510 and the connecting member 520.

Optionally, the moving assembly 500 includes a guide rail, the first position adjustment mechanism 410 is disposed on the guide rail, and the driving member 510 is connected to the first position adjustment mechanism 410 to drive the first position adjustment mechanism 410 to move on the guide rail.

The guide rail may be disposed on the battery swapping platform 200 and extend in the first direction, to facilitate movement of the first position adjustment mechanism 410 along the guide rail. By disposing the guide rail, a risk of deviation of the first position adjustment mechanism 410 during movement can be reduced, which helps improve accuracy of the position of the first position adjustment mechanism 410 and reduce a risk of deviation of the first position adjustment mechanism 410 in the second direction during movement.

Optionally, a first locking portion is disposed on the guide rail, a second locking portion is disposed on the first position adjustment mechanism 410, and the first locking portion and the second locking portion cooperate to fix the first position adjustment mechanism 410 on the guide rail when the first position adjustment mechanism 410 moves to the target position.

Optionally, the first locking portion may be a groove disposed on a wall that is of the guide rail and that faces the first position adjustment mechanism 410, and the second locking portion may be a stud disposed on a wall that is of the first position adjustment mechanism 410 and that faces the slide rail. The stud is located in the wall of the first position adjustment mechanism 410 during the movement of the first position adjustment mechanism 410, and after the first position adjustment mechanism 410 is moved to the target position, the stud protrudes from the wall of the first position adjustment mechanism 410 and is inserted into the groove, thereby fixing the first position adjustment mechanism 410 on the guide rail.

Optionally, a sensor is disposed on the first position adjustment mechanism 410, to detect a current position of the first position adjustment mechanism 410.

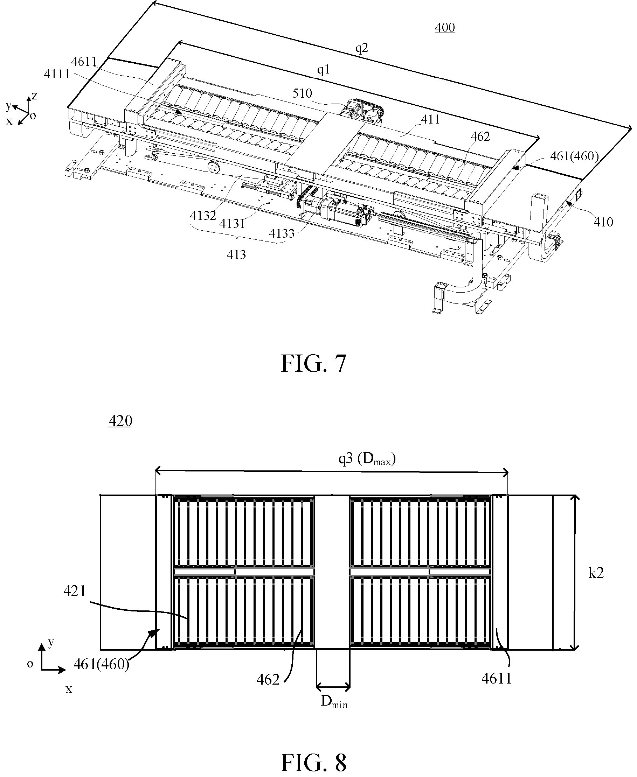

FIG. 7 is a schematic diagram of a position adjustment apparatus according to an embodiment of the present application. In some embodiments, as shown in FIG. 5 and FIG. 7, the first position adjustment mechanism 410 includes a first carrier platform 411, the first carrier platform 411 being configured to carry a wheel of a battery swapping vehicle 1.

Optionally, the first carrier platform 411 is a flat plate-shaped platform for carrying a battery swapping vehicle 1.

Optionally, the first carrier platform 411 has a groove in which the wheel of the battery swapping vehicle 1 is located.

Optionally, in the second direction, a size q1 of the first carrier platform 411 is smaller than or equal to a size q2 of the first position adjustment mechanism 410. For example, as shown in FIG. 3 and FIG. 7, in the second direction, the size q1 of the first carrier platform 411 is smaller than the size q2 of the first position adjustment mechanism 410. The size q1 of the first carrier platform 411 in the second direction and the size q2 of the first position adjustment mechanism 410 in the second direction may be maximum sizes in the second direction.

The first carrier platform 411 is configured to carry the wheel of the battery swapping vehicle 1, that is, after the battery swapping vehicle 1 enters the battery swapping platform 200, the wheel of the battery swapping vehicle 1 is located on the first carrier platform 411. For example, two front wheels or two rear wheels of the battery swapping vehicle 1 are located on the first carrier platform 411.

The first carrier platform 411 is movable in the first direction, so that the first carrier platform 411 may be moved in the first direction to correspondingly carry the wheel of the battery swapping vehicle 1. In addition, after the battery swapping vehicle 1 drives to the first carrier platform 411, the wheel of the battery swapping vehicle 1 may be adjusted in the second direction to adjust a position of the battery swapping vehicle 1 on the first carrier platform 411.

In this embodiment, the carrying of the wheel of the battery swapping vehicle 1 is implemented by using the first carrier platform 411, thereby facilitating adjustment of a position of the battery swapping vehicle 1 in the second direction by adjusting a position of the wheel of the battery swapping vehicle 1 in the second direction on the first carrier platform 411.

Optionally, in some embodiments, the first carrier platform 411 is configured to be non-liftable. In this way, the battery swapping vehicle 1 may be lifted by a vehicle lifting apparatus 300. For example, the chassis of the battery swapping vehicle 1 is lifted by the vehicle lifting apparatus 300.

In some embodiments, the first carrier platform 411 is configured to be liftable. In this way, after the battery swapping vehicle 1 is moved to a battery swapping position by using the first carrier platform 411, the wheel may be lifted by the first carrier platform 411 to implement lifting of the battery swapping vehicle 1, thereby facilitating subsequent battery swapping operations.

The first carrier platform 411 may lift the battery swapping vehicle 1 in a height direction of the battery swapping vehicle 1. The height direction of the battery swapping vehicle 1 is perpendicular to a plane in which the battery swapping platform 200 is located.

Optionally, the liftable first carrier platform 411 may be configured to lift a front wheel of the battery swapping vehicle 1. For example, the first carrier platform may be configured to lift front wheels of some logistics vehicles. For another example, the first carrier platform may also lift front wheels of some passenger vehicles.

The battery swapping position of the battery swapping vehicle 1 may be a position of the battery swapping vehicle 1 adjusted by the position adjustment apparatus 400. After the battery swapping vehicle 1 is adjusted to the battery swapping position, positions of the battery swapping vehicle 1 in an x direction and a y direction of the battery swapping platform 200 are fixed.

Optionally, as shown in FIG. 6 and FIG. 7, the first position adjustment mechanism 410 includes a lifting member 413, the lifting member 413 being configured to lift the first carrier platform 411 of the first position adjustment mechanism 410. The lifting member 413 may include a base 4131, a telescopic rod 4132, and a driving motor 4133. The base 4131 is fixedly connected to the battery swapping platform 200 or is a part of the battery swapping platform 200, the driving motor 4133 is connected to the telescopic rod 4132 to drive the telescopic rod 4132 to extend and retract in a third direction (a z direction in FIG. 7), and both ends of the telescopic rod 4132 in the third direction are connected to the base 4131 and the first carrier platform 411, respectively. Under the driving of the driving motor 4133, the first carrier platform 411 may lift in the height direction of the battery swapping vehicle 1, to lift the battery swapping vehicle 1.

Optionally, a lifting height of the first carrier platform 411 may be set based on a ground clearance of the chassis of the battery swapping vehicle 1, to reduce a case in which the battery swapping apparatus collides with the chassis or batteries during battery swapping due to a lower lifting height.

Optionally, a movable range of the first carrier platform 411 in the third direction is 250 mm to 300 mm, for example, 290 mm. That is, a height at which the wheel of the battery swapping vehicle 1 can be lifted by the first carrier platform 411 is 250 mm to 300 mm.

In some embodiments, as shown in FIG. 5 and FIG. 7, the first carrier platform 411 includes a wheel positioning groove 4111.

Optionally, the wheel positioning groove 4111 is a groove that is on the first carrier platform 411 and that is recessed in the third direction away from the battery swapping vehicle 1. Optionally, a depth at which the wheel positioning groove 4111 is recessed may be set based on the diameter of the wheel of the battery swapping vehicle 1.

In this way, after the battery swapping vehicle 1 is moved to the battery swapping position by using the first carrier platform 411, the battery swapping vehicle 1 is fixed on the first carrier platform 411 by using the wheel positioning groove 4111, to prevent movement of the battery swapping vehicle in a process of lifting the battery swapping vehicle 1, thereby facilitating improvement of reliability of a battery swapping process.

In some embodiments, a movable range of the first position adjustment mechanism 410 in the first direction is 180 mm to 400 mm, for example, 180 mm, 200 mm, 300 mm, or 400 mm.

When the movable range of the first position adjustment mechanism 410 in the first direction is less than 180 mm, compatibility with battery swapping vehicles 1 of different vehicle lengths is poor; and when the movable range of the first position adjustment mechanism 410 in the first direction is more than 400 mm, the battery swapping station 100 occupies more space, resulting in waste of space and an increase in production costs.

In this embodiment, the movable range of the first position adjustment mechanism 410 in the first direction is set to 180 mm to 400 mm, to adapt to battery swapping vehicles 1 of various vehicle lengths, and facilitate control of costs.

Optionally, the movable range of the first position adjustment mechanism 410 in the first direction is 190 mm to 210 mm, for example, 190 mm, 200 mm, or 210 mm. In this way, compatibility with more battery swapping vehicles 1 is facilitated, and control of costs is also facilitated.

Optionally, the movable range of the first position adjustment mechanism 410 in the first direction may be set based on the following information. For example, the first position adjustment mechanism 410 may be applicable to a first battery swapping vehicle and a second battery swapping vehicle. The first battery swapping vehicle is a vehicle with the longest wheelbase to which the first position adjustment mechanism 410 can be applicable, and the second battery swapping vehicle is a vehicle with the shortest wheelbase to which the first position adjustment mechanism 410 is applicable. A wheelbase refers to a distance between a wheel center of a front wheel and a wheel center of a rear wheel in the first direction. The minimum distance between a wheel center of a front wheel of the first battery swapping vehicle and a battery in the first direction is d1, the minimum distance between a wheel center of a front wheel of the second battery swapping vehicle and a battery in the first direction is d2, and the movable range of the first position adjustment mechanism 410 in the first direction is d1-d2.

In some embodiments, with reference to FIG. 3, the position adjustment mechanism 400a further includes a second position adjustment mechanism 420, the first position adjustment mechanism 410 and the second position adjustment mechanism 420 are sequentially disposed in the first direction, and the first position adjustment mechanism 410 and the second position adjustment mechanism 420 are respectively configured to correspond to at least two wheels of the battery swapping vehicle 1 that are disposed at different positions in the first direction.

In the first direction, the battery swapping vehicle 1 includes at least two wheels, for example, a front wheel and a rear wheel. When the battery swapping vehicle 1 includes only two pairs of wheels, i.e., front wheels and rear wheels, the first position adjustment mechanism 410 and the second position adjustment mechanism 420 correspond to the front wheels and the rear wheels, respectively, or the first position adjustment mechanism 410 and the second position adjustment mechanism 420 correspond to the rear wheels and the front wheels, respectively.

Optionally, the battery swapping vehicle 1 includes three or more wheels in the first direction. For example, for medium and large logistics vehicles, the battery swapping vehicle 1 further includes a plurality of pairs of wheels located between the front wheels and the rear wheels. In this case, the first position adjustment mechanism 410 and the second position adjustment mechanism 420 may be disposed to correspond to the plurality of pairs of wheels in addition to being disposed to correspond to the front wheels and the rear wheels, respectively.

In this embodiment, by disposing the first position adjustment mechanism 410 and the second position adjustment mechanism 420, the position adjustment apparatus may be compatible to different types of battery swapping vehicles 1.

In some embodiments, the first position adjustment mechanism 410 is disposed to correspond to a front wheel position of the battery swapping vehicle 1, and the second position adjustment mechanism 420 is disposed to correspond to a rear wheel position of the battery swapping vehicle 1.

Optionally, a battery position in the battery swapping vehicle 1 is positioned by using a front wheel as a reference, and the size of the first position adjustment mechanism 410 is smaller than the size of the second position adjustment mechanism 420 in the first direction. By disposing the first position adjustment mechanism 410 corresponding to the front wheel position of the battery swapping vehicle 1 to be movable in the first direction, parking and positioning of the battery swapping vehicle 1 are facilitated, and reduction of production costs is also facilitated.

FIG. 8 is a schematic diagram of a second position adjustment mechanism according to an embodiment of the present application. In some embodiments, as shown in FIG. 3 and FIG. 8, a position of the second position adjustment mechanism 420 in the first direction is fixed, the second position adjustment mechanism 420 includes a second carrier platform 421, and a size k2 of the second carrier platform 421 in the first direction is greater than a size k1 of the first carrier platform 411 of the first position adjustment mechanism 410 in the first direction.

The size k2 of the second carrier platform 421 in the first direction may be a maximum size of the second carrier platform 421 in the first direction, and the size k1 of the first carrier platform 411 in the first direction may be a maximum size of the first carrier platform 411 in the first direction.

The first position adjustment mechanism 410 includes the first carrier platform 411, the second position adjustment mechanism 420 includes the second carrier platform 421, the battery swapping vehicle 1 may be parked on the first carrier platform 411 and the second carrier platform 421 after the first position adjustment mechanism 410 moves to the target position, the battery swapping vehicle 1 is carried by the first carrier platform 411 and the second carrier platform 421, and a position of the battery swapping vehicle 1 in the second direction is adjusted on the first carrier platform 411 and the second carrier platform 421.

The first position adjustment mechanism 410 is movable in the first direction, the position of the second position adjustment mechanism 420 in the first direction is fixed, and the maximum size of the second carrier platform 421 in the first direction is greater than the maximum size of the first carrier platform 411 in the first direction. In this way, this may be compatible with a plurality of types of battery swapping vehicles, while the structural complexity of the position adjustment apparatus 400 may be reduced, thereby facilitating reduction of production costs.

Optionally, the second carrier platform 421 is configured to be liftable. A structure of a lifting member for lifting of the second carrier platform 421 may be the same as a structure of the lifting member 413 for lifting of the first carrier platform 411, and details are not described herein again.

Optionally, a liftable range of the second carrier platform 421 is 150 mm to 200 mm, for example, 150 mm, 170 mm, 190 mm, or 200 mm.

In some embodiments, the second carrier platform 421 is configured to carry at least two wheels of the battery swapping vehicle 1 in the first direction.

When the battery swapping vehicle 1 has three or more pairs of wheels, the second carrier platform 421 may carry at least two wheels of the battery swapping vehicle 1 in the first direction. In this way, by disposing the second carrier platform 421, the position adjustment apparatus 400 may be compatible with more types of battery swapping vehicles 1, such as a non-passenger vehicle including three or more pairs of wheels.

In some embodiments, the size k2 of the second carrier platform 421 in the first direction is 1000 mm to 1500 mm; and optionally, k2 is 1100 mm to 1300 mm. For example, the size k2 of the second carrier platform 421 in the first direction is 1000 mm, 1100 mm, 1200 mm, 1300 mm, or 1500 mm.

Optionally, the size of the second position adjustment mechanism 420 in the first direction is the same as the size k2 of the second carrier platform 421 in the first direction. Optionally, the size of the first position adjustment mechanism 410 in the first direction is the same as the size k1 of the first carrier platform 411 in the first direction.

In this embodiment, the size of the second position adjustment mechanism 420 is 1000 mm to 1500 mm, and wheels of battery swapping vehicles of a plurality of vehicle models may be located on the second position adjustment mechanism 420. For example, after a vehicle whose vehicle length exceeds 4 m, 6 m, or even 8 m drives to the battery swapping platform, a rear wheel may be completely located on the second position adjustment mechanism 420. In addition, the second position adjustment mechanism 420 moves a small distance or does not move in the first direction, so that position adjustment of battery swapping vehicles 1 having different vehicle lengths can be implemented.

In some embodiments, the second position adjustment mechanism 420 is movable in the first direction.

In this embodiment, both the first position adjustment mechanism 410 and the second position adjustment mechanism 420 are movable in the first direction. In this way, an adjustment range of the position of the position adjustment mechanism 400a in the first direction can be further increased, and may be applicable to more types of battery swapping vehicles 1. In addition, the flexibility of the position adjustment mechanism 400a is enhanced, facilitating flexible adjustment of the positions of the first position adjustment mechanism 410 and the second position adjustment mechanism 420 in the first direction based on actual conditions.

Optionally, the moving assembly 500 is connected to the second position adjustment mechanism 420 and is configured to move the second position adjustment mechanism 420 in the first direction to a target position.

The target position of the second position adjustment mechanism 420 may be a position of the second position adjustment mechanism 420 obtained by the control system of the battery swapping station 100 based on vehicle information of a battery swapping vehicle 1. When the second position adjustment mechanism 420 is located at the target position, the battery swapping vehicle 1 or a wheel of the battery swapping vehicle 1 is located on the second position adjustment mechanism 420.

In some embodiments, the movable range of the first position adjustment mechanism 410 is greater than a movable range of the second position adjustment mechanism 420. In this way, the first position adjustment mechanism 410 has a larger movable range in the first direction, and the second position adjustment mechanism 420 has a smaller movable range in the second direction, thereby ensuring adaptation to more types of battery swapping vehicles 1 while reducing production costs.

In some embodiments, as shown in FIG. 7 and FIG. 8, the position adjustment apparatus 400 further includes a position calibration mechanism 460, the position calibration mechanism 460 being configured to move the battery swapping vehicle 1 in the second direction to a preset position, where the second direction is perpendicular to the first direction.

After the battery swapping vehicle 1 enters the battery swapping platform 200, the battery swapping vehicle 1 may deviate from the preset position. The position calibration mechanism 460 may move the battery swapping vehicle 1 in the second direction to the preset position, thereby facilitating subsequent battery swapping operations.

The preset position is a position at which the battery swapping vehicle 1 performs battery swapping, that is, a battery swapping position.

In some embodiments, the position calibration mechanism 460 includes a push rod mechanism 461, the push rod mechanism 461 being configured to push the battery swapping vehicle 1 in the second direction to the preset position.

After the battery swapping vehicle 1 enters the battery swapping platform, the battery swapping vehicle 1 may exhibit a condition such as a vehicle body skew, or a vehicle body skew toward a side in the second direction of the battery swapping platform 200. By using the push rod mechanism 461, the vehicle body of the battery swapping vehicle 1 can be aligned, or the battery swapping vehicle 1 may be moved in the second direction to the preset position, thereby facilitating subsequent battery swapping operations.

In some embodiments, the first position adjustment mechanism 410 includes the first carrier platform 411, the position adjustment apparatus 400 further includes the second carrier platform 421, the first carrier platform 411 and the second carrier platform 421 are respectively configured to carry wheels of the battery swapping vehicle 1 that are disposed at different positions in the first direction, and at least one of the first carrier platform 411 and the second carrier platform 421 is provided with a plurality of rollers 462 arranged in the second direction.

The plurality of rollers 462 are arranged in the second direction. In this way, the plurality of rollers 462 may transport the battery swapping vehicle 1 in the second direction to the preset position under the action of the push rod mechanism 461.

In some embodiments, the push rod mechanism 461 is disposed on at least one of the first carrier platform 411 and the second carrier platform 421 for pushing the battery swapping vehicle 1 on the first carrier platform 411 and/or the second carrier platform 421 to the preset position.

Optionally, as shown in FIG. 7 and FIG. 8, the push rod mechanism 461 includes a push rod 4611 and a push rod driving member (not shown in the figures), the push rod 4611 being connected to the push rod driving member, and the push rod 4611 being a rod extending in the first direction. Under the driving of the push rod driving member, the push rod 4611 moves in the second direction, thereby pushing the battery swapping vehicle 1 to move in the second direction.

Optionally, after the push rod 4611 pushes the battery swapping vehicle 1 to the preset position, the push rod 4611 returns to an initial position. Optionally, the initial position of the push rod 4611 is located at a first end of the first carrier platform 411 and/or the second carrier platform 421 in the second direction, the first end being an end close to an edge of the battery swapping platform 200.

Optionally, a movable range of the push rod 4611 in the second direction is 300 mm to 500 mm, for example, 300 mm, 400 mm, or 500 mm.

Optionally, a movable range of the wheel of the battery swapping vehicle 1 in the second direction is 200 mm to 400 mm, for example, 200 mm, 350 mm, or 400 mm.

In this embodiment, the push rod mechanism 461 is disposed on at least one of the first carrier platform 411 and the second carrier platform 421. On the one hand, it is easy to push the battery swapping vehicle 1; on the other hand, there is no need for additional installation space for the push rod mechanism 461 on the battery swapping platform 200, thereby facilitating improvement of space utilization of the battery swapping platform 200.

In some embodiments, as shown in FIG. 7, at least one of the first carrier platform 411 and the second carrier platform 421 is provided with two rows of rollers 462 that are opposite to each other in the first direction, the two rows of rollers 462 being inclined relative to each other to form a positioning groove for fixing a wheel. In this way, after the battery swapping vehicle 1 is moved to the preset position, the battery swapping vehicle is positioned and fixed by using the positioning groove formed by the rollers 462.

Each row of rollers 462 includes a plurality of rollers 462 arranged in the second direction.

The two rows of rollers 462 are inclined relative to each other, that is, there is a certain included angle between the two rows of rollers 462, to collectively define a positioning groove for fixing a wheel.

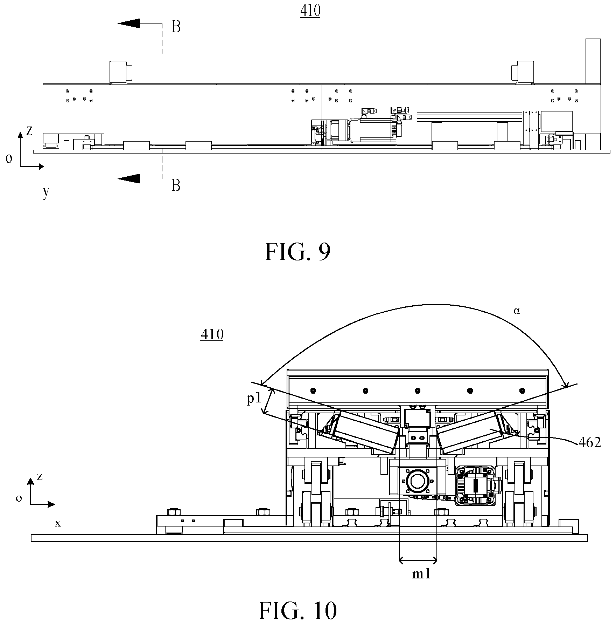

FIG. 9 is a schematic diagram of a first position adjustment mechanism according to an embodiment of the present application, and FIG. 10 is a schematic diagram of a cross-section in a direction B-B in FIG. 9. Optionally, as shown in FIG. 9 and FIG. 10, the included angle between the two rows of rollers 462 is an obtuse angle, for example, the included angle α between the two rows of rollers 462 is 148°.

Optionally, a distance m1 between the two rows of rollers 462 in the first direction is 80 mm to 90 mm, for example, 80 mm, 85 mm, or 90 mm.

### Optionally, one roller 462 has a diameter p1 of 60 mm.

Optionally, the second carrier platform 421 includes two second sub-carrier platforms that are disposed opposite and spaced apart in the second direction. A minimum distance Dₘᵢₙ between two adjacent second sub-carrier platforms may be 250 mm to 300 mm, for example, 250 mm, 290 mm, or 300 mm; and a maximum distance Dₘₐₓ may be 2000 mm to 2300 mm, for example, 2000 mm, 2170 mm, or 2300 mm.

Optionally, as shown in FIG. 7, FIG. 8 and FIG. 10, the two rows of rollers 462 on the first carrier platform 411 are inclined relative to each other to form the positioning groove for fixing a wheel, and the two rows of rollers 462 on the second carrier platform 421 are disposed horizontally. In this way, it is convenient for a battery swapping vehicle to be parked on the first carrier platform 411 and the second carrier platform 421.

In some embodiments, the size q1 of the first carrier platform 411 in the second direction and/or the size q3 of the second carrier platform 421 in the second direction is 2000 mm to 2300 mm, optionally, 2170 mm. In this way, it is easy to adapt to battery swapping vehicles 1 of different vehicle widths and different wheel sizes.

In some embodiments, the position adjustment mechanism 400a further includes a third position adjustment mechanism, the third position adjustment mechanism being located between the first position adjustment mechanism 410 and the second position adjustment mechanism 420 in the first direction, and configured to adjust a battery swapping position of a battery swapping vehicle 1 together with the first position adjustment mechanism 410 or the second position adjustment mechanism 420.

For example, when the vehicle length of the battery swapping vehicle 1 is small, for example, the vehicle length is 3 m to 4 m, a front wheel of the battery swapping vehicle 1 is parked on the third position adjustment mechanism, a rear wheel of the battery swapping vehicle 1 is parked on the second position adjustment mechanism 420, and position adjustment and positioning of the battery swapping vehicle 1 are implemented by using the third position adjustment mechanism and the second position adjustment mechanism 420.

For another example, when the vehicle length of the battery swapping vehicle 1 is small and the battery swapping vehicle 1 brakes late, causing a front wheel of the battery swapping vehicle 1 to pass the third position adjustment mechanism, the front wheel of the battery swapping vehicle 1 is parked at the first position adjustment mechanism 410, a rear wheel of the battery swapping vehicle 1 is parked at the third position adjustment mechanism, and position adjustment and positioning of the battery swapping vehicle 1 are implemented by using the first position adjustment mechanism 410 and the third position adjustment mechanism.

In this embodiment, the position adjustment apparatus 400 may be compatible with a battery swapping vehicle with a small vehicle length, for example, a minicar.

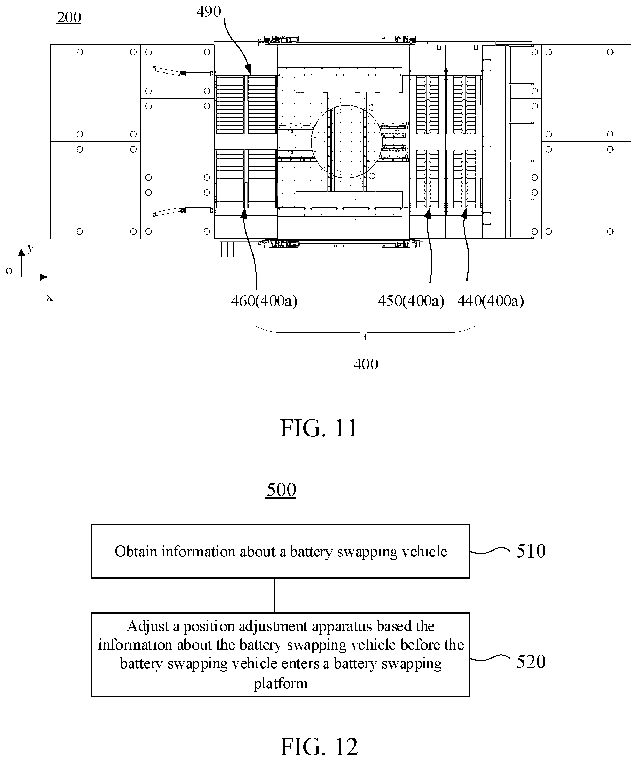

FIG. 11 is a schematic diagram of a battery swapping platform according to an embodiment of the present application. In some embodiments, as shown in FIG. 11, the position adjustment mechanism 400a includes at least three position adjustment mechanisms, the at least three position adjustment mechanisms being sequentially disposed in the first direction, and at least two of the at least three position adjustment mechanisms being configured to respectively correspond to wheels of a battery swapping vehicle 1 that are disposed at different positions in the first direction. In this way, it is easy to adjust the battery swapping position of the battery swapping vehicle 1 by selecting a corresponding position adjustment mechanism based on the vehicle length of the battery swapping vehicle 1.

Optionally, positions of the at least three position adjustment mechanisms in the first direction are fixed.

In some embodiments, the at least three position adjustment mechanisms include a fourth position adjustment mechanism 440, a fifth position adjustment mechanism 450, and a sixth position adjustment mechanism 460 that are sequentially disposed in the first direction, the sixth position adjustment mechanism 460 being disposed to correspond to a rear wheel of the battery swapping vehicle 1, the fourth position adjustment mechanism 440 being disposed to correspond to a front wheel of the battery swapping vehicle 1, and the fifth position adjustment mechanism 450 being disposed to correspond to another wheel of the battery swapping vehicle 1 that is located at the front and rear wheels. In this way, it is easy to carry the battery swapping vehicle 1 and adjust the position of the battery swapping vehicle 1 by selecting a corresponding position adjustment mechanism based on the vehicle length of the battery swapping vehicle 1.

Optionally, the at least three position adjustment mechanisms may further include four, five, or more position adjustment mechanisms.

In some embodiments, the position adjustment apparatus 400 further includes an adjustment mechanism 490, the adjustment mechanism 490 being configured to move the battery swapping vehicle 1 in the second direction to the preset position, where the second direction is perpendicular to the first direction. After the battery swapping vehicle 1 enters the battery swapping platform 200, the battery swapping vehicle 1 may deviate from the preset position. The adjustment mechanism 490 may move the battery swapping vehicle 1 to the preset position, thereby facilitating subsequent battery swapping operations.

Optionally, the structure of the adjustment mechanism 490 is the same as that of the position calibration mechanism 460 described above, and for similar descriptions, reference may be made to the above descriptions and related drawings.

For example, the adjustment mechanism includes a push rod mechanism, the push rod mechanism being configured to push the battery swapping vehicle 1 in the second direction to the preset position. After the battery swapping vehicle 1 enters the battery swapping platform 200, the battery swapping vehicle 1 may exhibit a condition such as a vehicle body skew, or a vehicle body skew toward a side in the second direction of the battery swapping platform 200. By using the push rod mechanism, the vehicle body of the battery swapping vehicle 1 can be aligned, or the battery swapping vehicle 1 may be moved in the second direction to the preset position, thereby facilitating subsequent battery swapping operations.

Optionally, at least one of the at least three position adjustment mechanisms includes a carrier platform, the carrier platform being configured to carry a wheel of the battery swapping vehicle 1. The structure of the carrier platform is the same as that of the first carrier platform or the second carrier platform described above, and for similar descriptions, reference may be made to the above descriptions and related drawings.

For example, a plurality of rollers arranged in the second direction are disposed on the carrier platform, the plurality of rollers being configured to transport the battery swapping vehicle 1 in the second direction.

For another example, two rows of rollers that are opposite to each other in the first direction are disposed on the carrier platform, the two rows of rollers being inclined relative to each other to form a positioning groove for fixing a wheel. In this way, after the battery swapping vehicle 1 is moved to the preset position, the battery swapping vehicle is positioned and fixed by using the positioning groove formed by the rollers.

For another example, the carrier platform is configured to be liftable.

The present application provides a battery swapping station, including the position adjustment apparatus 400 according to any one of the embodiments described above.

FIG. 12 is a schematic diagram of a battery swapping method according to an embodiment of the present application. As shown in FIG. 12, the present application provides a battery swapping method 500, which includes the following steps.

Step 510: obtaining information about a battery swapping vehicle 1.

The information about the battery swapping vehicle 1 may include: a model of the battery swapping vehicle 1, a vehicle length of the battery swapping vehicle 1, a wheelbase, a vehicle width, a weight, a size of a chassis, a ground clearance of the chassis, a size of a wheel, a distance between a front wheel of the battery swapping vehicle 1 and a battery, or the like.

Step 520: adjusting a position adjustment apparatus 400 based the information about the battery swapping vehicle 1 before the battery swapping vehicle 1 enters a battery swapping platform 200.

Different battery swapping vehicles 1 correspond to different position adjustment mechanisms in the position adjustment apparatus 400 or specific positions of corresponding position adjustment mechanisms of the position adjustment apparatus 400 are different. Therefore, after the information about the battery swapping vehicle 1 is obtained and before the battery swapping vehicle 1 enters the battery swapping platform 200, the position adjustment apparatus 400 is adjusted, so that the position adjustment apparatus 400 adapts to a corresponding battery swapping vehicle 1.

The battery swapping method 500 of the present application may be performed by a control system of a battery swapping station.

In some embodiments, Step 520 includes: moving positions of several position adjustment mechanisms 400a to correspond to the information about the battery swapping vehicle 1; or determining several position adjustment mechanisms 400a corresponding to the information about the battery swapping vehicle 1.

The several position adjustment mechanisms 400a may be at least one position adjustment mechanism 400a.

The position adjustment apparatus 400 includes several position adjustment mechanisms 400a that can adjust a position in a first direction. In Step 520, positions of the several position adjustment mechanisms 400a in the first direction may be adjusted based on the information about the battery swapping vehicle 1 to correspond to the information about the battery swapping vehicle 1. In this way, after the battery swapping vehicle 1 enters the battery swapping platform, the battery swapping vehicle 1 may be located on a corresponding position adjustment mechanism 400a.

For example, Step 520 may be applied to the position adjustment apparatus 400 that includes a first position adjustment mechanism 410. After the information about the battery swapping vehicle 1 is obtained, the first position adjustment mechanism 410 may be controlled based on the information about the battery swapping vehicle 1 to move in the first direction to a target position. In this way, after the battery swapping vehicle 1 enters the battery swapping platform 200, a wheel of the battery swapping vehicle 1 may be located on the first position adjustment mechanism 410, and then a position of the battery swapping vehicle 1 may be adjusted by using the first position adjustment mechanism 410.

The position adjustment apparatus 400 includes several position adjustment mechanisms 400a that are fixed in position in the first direction. In Step 520, a position adjustment mechanism 400a corresponding to the battery swapping vehicle 1 may be determined based on the information about the battery swapping vehicle 1. In this way, after entering the battery swapping platform, the battery swapping vehicle 1 may be located on a corresponding position adjustment mechanism 400a.

For example, Step 520 may be applied to the position adjustment apparatus 400 including a fourth position adjustment mechanism 440, a fifth position adjustment mechanism 450, and a sixth position adjustment mechanism 460 that are sequentially disposed and fixed in the first direction. The sixth position adjustment mechanism 460 corresponds to a rear wheel of the battery swapping vehicle 1, the fourth position adjustment mechanism 440 corresponds to a front wheel of the battery swapping vehicle 1, and the fifth position adjustment mechanism 450 corresponds to a wheel between the front wheel and the rear wheel of the battery swapping vehicle 1.

In this embodiment, it is easy to adjust the position adjustment apparatus 400 based on a specific setting of the position adjustment apparatus 400 and the information about the battery swapping vehicle 1, to implement compatibility with different types of battery swapping vehicles 1.

In some embodiments, the method 500 further includes: controlling the position adjustment apparatus 400 to adjust the position of the transduction vehicle 1 after the battery swapping vehicle 1 is parked on the position adjustment apparatus 400.

In this way, after the battery swapping vehicle enters the battery swapping platform 200, a corresponding position adjustment mechanism 400a in the position adjustment apparatus 400 is controlled to adjust a position of the battery swapping vehicle 1 in a second direction, to facilitate subsequent battery swapping operations.

It should be noted that, for a related technical solution of the position adjustment apparatus 400 that is not mentioned in the battery swapping method, reference may be made back to the technical solutions of the embodiments of the position adjustment apparatus, and details are not described herein again.

Although this application has been described with reference to some preferred embodiments, various modifications to this application and replacements of the components therein with equivalents can be made without departing from the scope of this application. In particular, the technical features mentioned in the embodiments may be combined in any manner provided that there is no structural conflict. The present application is not limited to the specific embodiments disclosed herein, but includes all technical solutions falling within the scope of the claims.

## Claims

1. A position adjustment apparatus, wherein the position adjustment apparatus (400) is configured for battery swapping of vehicles, and the position adjustment apparatus (400) comprises at least one position adjustment mechanism (400a), the position adjustment mechanism (400a) being disposed to be movable in at least one of a first direction (x) or a second direction (y), wherein the first direction (x) and the second direction (y) are a vehicle length direction and a vehicle width direction, respectively.

2. The position adjustment apparatus according to claim 1, wherein the position adjustment mechanism (400a) comprises a first position adjustment mechanism (410), the first position adjustment mechanism (410) being movable in the first direction (x).

3. The position adjustment apparatus according to claim 2, wherein the position adjustment mechanism (400a) further comprises a moving assembly (500), the moving assembly (500) being connected to the first position adjustment mechanism (410) and configured to move the first position adjustment mechanism (410) in the first direction (x) to a target position.

4. The position adjustment apparatus according to claim 3, wherein the moving assembly (500) comprises a driving member (510) and a connecting member (520), one end of the connecting member (520) being connected to the driving member (510) and the other end being connected to the first position adjustment mechanism (410), to drive the first position adjustment mechanism (410) to move in the first direction (x) under the driving of the driving member (510).

5. The position adjustment apparatus according to any one of claims 2 to 4, wherein the first position adjustment mechanism (410) comprises a first carrier platform (411), the first carrier platform (411) being configured to carry a wheel of a battery swapping vehicle (1).

6. The position adjustment apparatus according to claim 5, wherein the first carrier platform (411) is disposed to be liftable.

7. The position adjustment apparatus according to claim 5 or 6, wherein the first carrier platform (411) comprises a wheel positioning groove (4111).

8. The position adjustment apparatus according to any one of claims 2 to 7, wherein a movable range of the first position adjustment mechanism (410) in the first direction (x) is 180 mm to 400 mm; and optionally, the movable range of the first position adjustment mechanism (410) in the first direction (x) is 190 mm to 210 mm.

9. The position adjustment apparatus according to any one of claims 2 to 8, wherein the position adjustment mechanism (400a) further comprises a second position adjustment mechanism (420), the first position adjustment mechanism (410) and the second position adjustment mechanism (420) are sequentially disposed in the first direction (x), and the first position adjustment mechanism (410) and the second position adjustment mechanism (420) are respectively configured to correspond to at least two wheels of the battery swapping vehicle (1) that are disposed at different positions in the first direction (x).

10. The position adjustment apparatus according to claim 9, wherein the first position adjustment mechanism (410) is disposed to correspond to a front wheel position of the battery swapping vehicle (1), and the second position adjustment mechanism (420) is disposed to correspond to a rear wheel position of the battery swapping vehicle (1).

11. The position adjustment apparatus according to claim 10, wherein a position of the second position adjustment mechanism (420) in the first direction (x) is fixed, and the second position adjustment mechanism (420) comprises a second carrier platform (421), a size k2 of the second carrier platform (421) in the first direction (x) being greater than a size k1 of the first carrier platform (411) of the first position adjustment mechanism (410) in the first direction (x).

12. The position adjustment apparatus according to claim 11, wherein the second carrier platform (421) is disposed to carry at least two wheels of the battery swapping vehicle (1) in the first direction (x).

13. The position adjustment apparatus according to claim 11 or 12, wherein the size k2 of the second carrier platform (421) in the first direction (x) is 1000 mm to 1500 mm; and optionally, the size k2 of the second carrier platform (421) in the first direction (x) is 1100 mm to 1300 mm.

14. The position adjustment apparatus according to claim 9 or 10, wherein the second position adjustment mechanism (420) is movable in the first direction (x).

15. The position adjustment apparatus according to claim 14, wherein in the first direction (x), the movable range of the first position adjustment mechanism (410) is larger than a movable range of the second position adjustment mechanism (420).

16. The position adjustment apparatus according to any one of claims 2 to 15, wherein the position adjustment apparatus (400) further comprises a position calibration mechanism (460), the position calibration mechanism (460) being disposed to move a position of the battery swapping vehicle (1) in the second direction (y) to a preset position.

17. The position adjustment apparatus according to claim 16, wherein the position calibration mechanism (460) comprises a push rod mechanism (461), the push rod mechanism (461) being disposed to push the battery swapping vehicle (1) in the second direction (y) to the preset position.

18. The position adjustment apparatus according to claim 17, wherein the first position adjustment mechanism (410) comprises the first carrier platform (411), the position adjustment apparatus (400) further comprises the second carrier platform (421), the first carrier platform (411) and the second carrier platform (421) are respectively disposed to carry wheels of the battery swapping vehicle (1) that are disposed at different positions in the first direction (x), and at least one of the first carrier platform (411) and the second carrier platform (421) is provided with a plurality of rollers (462) arranged in the second direction (y).

19. The position adjustment apparatus according to claim 18, wherein the push rod mechanism (461) is disposed on at least one of the first carrier platform (411) and the second carrier platform (421) for pushing the wheel of the battery swapping vehicle (1) on the first carrier platform (411) and/or the second carrier platform (421) to the preset position.

20. The position adjustment apparatus according to claim 18 or 19, wherein at least one of the first carrier platform (411) and the second carrier platform (421) is provided with two rows of rollers (462) that are opposite to each other in the first direction (x), the two rows of rollers (462) being inclined relative to each other to form a positioning groove for fixing a wheel.

21. The position adjustment apparatus according to any one of claims 17 to 20, wherein a size q1 of the first carrier platform (411) in the second direction (y) and/or a size q3 of the second carrier platform (421) in the second direction (y) is 2000 mm to 2300 mm; and optionally, the size q1 of the first carrier platform (411) in the second direction (y) and/or the size q3 of the second carrier platform (421) in the second direction (y) is 2000 mm to 2200 mm.

22. The position adjustment apparatus according to claim 1, wherein the position adjustment apparatus (400) comprises at least three position adjustment mechanisms (400a), the at least three position adjustment mechanisms (400a) being sequentially disposed in the first direction (x), and at least two of the at least three position adjustment mechanisms (400a) being configured to respectively correspond to wheels of a battery swapping vehicle (1) that are disposed at different positions in the first direction (x).

23. The position adjustment apparatus according to claim 22, wherein the position adjustment apparatus (400) further comprises an adjustment mechanism (490), the adjustment mechanism (490) being configured to move a position of the battery swapping vehicle (1) in the second direction (y) to a preset position.

24. A battery swapping station, comprising the position adjustment apparatus (400) according to any one of claims 1 to 23.

25. A battery swapping method, comprising:
obtaining information about a battery swapping vehicle (1); and
adjusting a position adjustment apparatus (400) based on the information about the battery swapping vehicle (1) before the battery swapping vehicle (1) enters a battery swapping platform.

26. The battery swapping method according to claim 25, wherein the adjusting a position adjustment apparatus (400) based on the information about the battery swapping vehicle (1) before the battery swapping vehicle (1) enters a battery swapping platform comprises:
moving positions of several position adjustment mechanisms (400a) to correspond to the information about the battery swapping vehicle (1); or
determining several position adjustment mechanisms (400a) corresponding to the information about the battery swapping vehicle (1).

27. The battery swapping method according to claim 26, further comprising:
controlling the position adjustment apparatus (400) to adjust a position of the battery swapping vehicle (1) after the battery swapping vehicle (1) is parked on the position adjustment apparatus (400).
